# FASCICULE DE BREVET EUROPEEN

(11) **EP 0 862 539 B1**
(45) Date de publication et mention de la délivrance du brevet: **27.06.2001**
(21) Numéro de dépôt: 96932765.9
(22) Date de dépôt: 18.10.1996
(51) Int. Cl.: C02F 9/00, C02F 1/76, C02F 1/44

(54) **PROCEDE DE PRETRAITEMENT D'EAUX BRUTES**
VERFAHREN ZUR VORBEHANDLUNG VON ROHWASSER
METHOD FOR PRETREATING RAW WATER

(30) Priorité: 19.10.1995 FR 9512540
(43) Date de publication de la demande: 09.09.1998
(73) Titulaire: F-Tec Indus S.A., 01630 Saint-Genis-Pouilly (FR)
(72) Inventeur: FRESNEL, Jean-Marie, F-01710 Thoiry (FR)
(74) Mandataire: Moinas, Michel
(86) Numéro de dépôt international: IB9601104
(87) Numéro de publication internationale: WO9714659

(56) Documents cités:
- DE-A- 3 121 337
- GB-A- 2 197 860
- US-A- 3 836 458
- US-A- 5 174 901

## Description

La présente invention est relative à un procédé de prétraitement d'eaux brutes en vue de produire de l'eau à caractère potable. Le prétraitement de ces eaux brutes peut être effectué en combinaison avec une opération ultérieure de séparation à membranes.

Dans le domaine de la production d'eau potable à partir d'eaux brutes, on connaît des procédés faisant appel à l'utilisation de charbon actif en amont d'une phase de séparation à membranes.

Un tel prétraitement utilisant du charbon actif agit sur l'eau au niveau moléculaire mais non au niveau des germes infectieux. Ceux-ci parviennent donc sans être traités jusqu'aux membranes de séparation, d'où un risque de blocage et de vieillissement prématuré de celles-ci.

De plus, une désinfection très fréquente des membranes est nécessaire afin de ne pas altérer leur efficacité, et ainsi la pureté de l'eau traitée.

En outre, la matière première utilisée, le charbon actif sous forme de poudre ou de granulés, est relativement onéreuse.

Le charbon actif peut également être utilisé pour réduire l'excès d'un agent désinfectant résiduel, comme décrit par exemple dans les documents GB-A-2 197 860 ou DE-A-31 21 337, mais le critère coût attaché au charbon actif le rend là aussi peu intéressant.

On connaît également des procédés de prétraitement utilisant l'ozone, ce qui a pour effet d'assurer une désinfection de l'eau, en amont d'autres dispositifs de traitement postérieurs.

Toutefois, lorsque ces dispositifs de traitement sont constitués par des moyens de séparation à membranes, la quantité d'ozone doit être limitée afin d'éviter qu'une trop grande concentration d'ozone ne vienne altérer prématurément les membranes. Cette limitation entraîne une désinfection non optimale de l'eau à traiter, ce qui peut provoquer, comme dans le procédé précédemment décrit, le blocage et le vieillissement prématuré des membranes.

De plus, l'ozone est un gaz onéreux, ce qui implique qu'un prétraitement par son biais est coûteux.

Enfin, dans la majorité des procédés de prétraitement d'eau brute existants, l'eau obtenue ne peut être ultérieurement utilisée pour la consommation humaine qu'à condition que l'eau brute de départ respecte des critères précis en termes de charges en sédiments et de salubrité, ce qui est souvent difficile.

Le but de la présente invention est un procédé de prétraitement d'eaux brutes en vue de produire de l'eau à caractère potable, procédé dans lequel aucun produit chimique n'est utilisé, préservant les membranes de moyens de séparation à membranes situés en aval, et peu onéreux à l'utilisation de par l'emploi de matières premières peu coûteuses. En outre, on peut prétraiter une eau brute quelle qu'elle soit avec le procédé selon l'invention.

De plus, le procédé selon l'invention est universel, quels que soient les moyens de séparation à membranes utilisés en aval : ultrafiltration, nanofiltration ou osmose inverse.

Ces buts sont atteints grâce à un procédé de prétraitement d'eaux brutes en vue de la production d'eau à caractère potable avant passage dans des moyens de séparation à membranes comprenant en combinaison et dans l'ordre une séquence de pompage de l'eau brute, une séquence de séparation des matières en suspension, une séquence de filtration fine et une séquence de désinfection poussée utilisant un composé chloré, l'excès de chlore actif résiduel étant réduit pendant cette désinfection poussée par électrolyse en courant alternatif de particules de fer telles que des copeaux ou de la grenaille.

Selon un mode de réalisation préféré, la séquence de séparation de l'eau brute pompée et des matières en suspension dans celle-ci est réalisée par cyclonage, ce qui permet d'extraire les particules en suspension dans l'eau brute d'une taille sensiblement supérieure à 40 microns. Cette séparation par cyclonage est performante, notamment plus performante que celles utilisant une grille, car un auto-nettoyage permanent est effectué, à la différence des dispositifs à grille, où il n'est pas rare de voir des feuilles provoquer un colmatage, entravant alors le bon fonctionnement de l'ensemble.

De préférence, la séquence de filtration fine comprend une première étape de filtration sur matière pulvérulente, suivie d'une étape de filtration biologique réalisée au moyen d'un filtre colonisé à l'équilibre par les micro-organismes présents dans l'eau à traiter, et se termine par une étape de filtration permettant de retenir la biomasse formée. L'ensemble de ces opérations permet en outre la digestion des matières grasses et organiques.

Avantageusement, la séquence de filtration fine comprend une première étape de filtration biologique suivie d'une étape de filtration sur matière pulvérulente, l'étape de filtration de la biomasse pouvant dans ce cas être supprimée. Cette configuration particulière est tout à fait adaptée au prétraitement d'eaux brutes chargées en hydrocarbures.

Dans l'une ou l'autre des deux dernières configurations décrites, la filtration biologique est réalisée au moyen d'un filtre qui, à l'équilibre, est colonisé par les micro-organismes présents dans l'eau à traiter.

De préférence, la séquence de désinfection poussée comprend une phase initiale de chloration de choc de l'eau, suivie d'une phase de réduction du chlore actif résiduel libre ou combiné réalisée simultanément avec une étape de coagulation des matières organiques résiduelles et de décantation du coagulum.

Avantageusement, le coagulum est réinjecté partiellement ou totalement à l'entrée de l'étape de filtration sur matière pulvérulente, ce qui permet notamment de rendre plus fin le gâteau de filtration.

Avantageusement, le composé nécessaire à la phase de chloration de choc est de l'hypochlorite produit sur place par électrolyse de saumure.

De manière préférentielle, les particules de fer nécessaires à la phase de réduction du chlore actif résiduel sont contenues dans des paniers de titane ou de zirconium recouverts d'un catalyseur tel que du palladium, ces paniers étant agités mécaniquement ou au moyen d'ultrasons.

Selon un mode de réalisation avantageux, une aération de l'eau par barbotage d'air est effectuée en aval de la phase de désinfection poussée.

A la fin de cette phase de désinfection poussée du procédé selon l'invention, l'eau est prétraitée, et peut même dans la majorité des cas, selon la qualité de l'eau brute de départ, être considérée comme conforme aux normes émises par l'Organisation Mondiale de la Santé quant à la qualification de l'eau apte à la consommation humaine.

Néanmoins, et avantageusement, le procédé de prétraitement d'eaux brutes selon l'invention peut être utilisé en combinaison avec des moyens de séparation à membranes situés en aval en vue d'en faire de manière certaine de l'eau à caractère potable. De tels moyens à membranes permettent d'arrêter l'hydroxyde de Fer^{III} issu de la séquence amont ou un virus éventuel qui aurait résisté au prétraitement selon l'invention, le seuil de coupure des membranes se situant sensiblement à 0,01 micron dans le cas de l'ultrafiltration et étant inférieur à 0,01 micron dans le cas de la nanofiltration et de l'osmose inverse.

Avantageusement, les moyens de séparation à membranes utilisés sont l'ultrafiltration ou la nanofiltration dans le cas où l'eau brute est une eau douce, ou encore l'osmose inverse dans le cas où l'eau brute est une eau de mer ou saumâtre. Plus particulièrement, dans le cas de l'eau douce, l'ultrafiltration est utilisée lorsque l'eau brute est polluée par des bactéries et la nanofiltration lorsqu'il y a pollution par des déchets chimiques ou des métaux lourds.

On aura compris un intérêt du procédé qui est d'une part d'effectuer un prétraitement poussé de l'eau brute avant un passage dans des moyens de séparation à membranes, d'où des opérations de désinfection des membranes plus espacées et ainsi une plus longue durée de vie de celles-ci, ainsi qu'une diminution du risque de blocage, et d'autre part de proposer une manière performante et économique pour réduire l'excès de chlore actif résiduel.

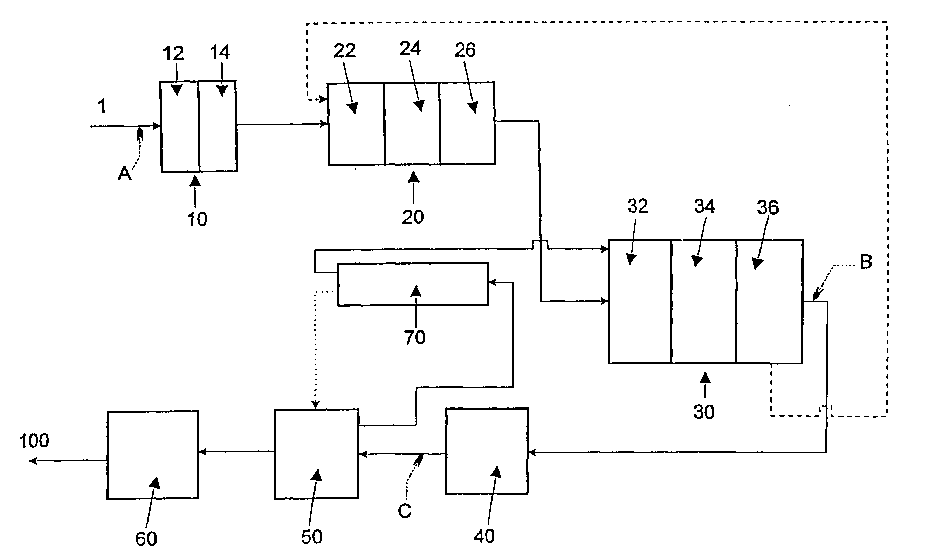

L'invention sera mieux comprise à l'étude d'un mode de réalisation non limitatif et illustré dans la figure, qui est une vue schématique du procédé de prétraitement d'eaux brutes selon l'invention.

Tel qu'illustré, le procédé de prétraitement comprend une première unité 10 composée d'un module de pompage 12 de l'eau brute 1 suivie d'un module de séparation 14 des particules en suspension dans celle-ci.

En aval de ce module de séparation 14 est disposée une unité de filtration fine à trois étages 20 composée dans l'ordre d'un étage de filtration sur matière pulvérulente 22, d'un étage de filtration biologique 24 et d'un étage de filtration de la biomasse formée 26.

A la suite de ce module de filtration à trois étages 20 est disposée une unité de désinfection poussée 30, composée dans l'ordre d'une phase de chloration de choc 32, d'une phase de réduction du chlore 34, et d'une phase de coagulation des matières organiques et de décantation du coagulum 36. Le composé nécessaire à la phase de chloration de choc 32 est de l'hypochlorite fourni in-situ par une station de production d'hypochlorite 70.

A la sortie de cette unité de désinfection poussée 30, l'eau brute est prétraitée et peut même souvent mériter le label de potable.

Toutefois, et afin de parfaire la qualité physico-chimique d'une eau brute fortement chargée en matières organiques, il n'est pas interdit de faire subir à cette eau prétraitée un traitement catalytique non représenté, par exemple, au moyen de charbon actif, traitement prenant place en aval de l'unité de désinfection poussée 30.

En vue de produire de manière certaine de l'eau potable, des moyens de séparation à membranes 40 sont disposés en aval du procédé de prétraitement d'eaux brutes selon l'invention. L'eau ainsi filtrée est envoyée dans un réservoir de stockage 50, puis dans une station de distribution 60 permettant la délivrance d'eau potable 100.

Tel que décrit précédemment, le procédé de prétraitement d'eaux brutes selon l'invention fonctionne de la manière suivante.

L'eau brute 1 est pompée au moyen du module de pompage 12, puis les particules en suspension dans celle-ci sont retenues par le biais du module de séparation 14. Plus particulièrement, ce module, fonctionnant par cyclonage, permet de retenir les particules d'une taille sensiblement supérieure à 40 microns.

L'eau à traiter pénètre ensuite dans l'unité de filtration à trois étages 20.

La première étape de filtration est une filtration sur matière pulvérulente 22, telle que la filtration sur sable ou diatomée, comme cela est bien connu et notamment utilisé pour les piscines.

Une filtration biologique 24 est ensuite effectuée, cette filtration étant réalisée au moyen d'un filtre colonisé à l'équilibre par les micro-organismes présents dans l'eau à traiter. La biomasse formée est ensuite filtrée en 26 au moyen d'une cartouche comprenant un filtre filamentaire.

L'eau ainsi filtrée subit ensuite une phase de chloration de choc 32. Cette phase se traduit par une désinfection de l'eau avec une forte dose d'hypochlorite en maintenant un temps de contact d'au moins huit minutes.

L'hypochlorite utilisé est préparé in-situ par électrolyse de saumure dans la station 70.

A la suite de cette phase de chloration de choc 32 a lieu une phase 34 de réduction du chlore actif résiduel libre ou combiné réalisée par électrolyse sous courant alternatif de particules de fer, par exemple, sous forme de copeaux ou de grenaille.

Un tel mode de réduction du chlore en excès est remarquable car il évite l'utilisation de floculants ou de coagulants, et la matière première, des particules de fer, est très bon marché.

Ce fer particulaire est contenu dans des paniers de titane, de zirconium ou de toute autre matière résistant au chlore ; ces paniers sont recouverts d'un métal qui catalyse la réaction de réduction du chlore et des composés organohalogénés par le fer. On peut utiliser le palladium comme catalyseur. Par ailleurs, un système d'agitation mécanique ou par ultrasons permet de casser la couche d'oxyde de fer qui se forme sur les particules de fer, afin que leur surface demeure active.

Simultanément à cette phase de réduction a lieu une phase 36 de coagulation des matières organiques non détruites par oxydation et de décantation du coagulum. La coagulation a lieu au moyen de chlorure ferrique FeCl₃ produit in-situ.

Le coagulum peut être réinjecté en partie ou en totalité à l'entrée de l'étage de filtration 22 sur matière pulvérulente, ce qui permet de créer un gâteau de filtration plus fin et de provoquer un début de coagulation de la matière organique contenue dans l'eau brute. Cette étape de filtration est donc optimisée.

L'eau prétraitée subit enfin un barbotage d'air destiné à assurer un dégazage, une oxydation des ions ferreux s'il en subsiste afin de les transformer en ions ferriques, et une saturation en oxygène dissous, ainsi qu'une décantation permettant d'isoler d'éventuelles particules de chlorure ferrique et d'oxyde de fer qui auraient été entraînées par le courant d'eau.

Le traitement catalytique éventuel au charbon actif, non représenté, permet finalement de détruire les dernières traces potentielles de chlore combiné qui pourraient être à l'origine de mauvais goût ou d'odeurs désagréables.

En vue de la production d'eau à caractère potable, l'eau prétraitée est alors envoyée dans des moyens de séparation à membranes 40. Cette eau a subi une désinfection intense, ce qui permet d'accroître sensiblement la durée de vie des membranes et de diminuer la fréquence de leur maintenance. De plus, cette eau ne contient plus d'organochlorés, qui, le cas échéant, seraient filtrés par les membranes.

Les moyens de séparation à membranes 40 utilisés sont l'ultrafiltration pour traiter une eau douce polluée à l'origine par des bactéries, la nanofiltration pour traiter une eau douce polluée à l'origine par des bactéries et des déchets chimiques, des métaux lourds, ou des anions polyvalents d'origine naturelle ou industrielle, et l'osmose inverse pour traiter une eau de mer ou saumâtre.

L'eau sortant de ces moyens de filtration à membranes possède un caractère potable, sauf dans le cas de l'osmose inverse où une reminéralisation de cette eau doit avoir lieu après traitement si celle-ci est destinée à la consommation humaine. Cette eau potable est alors stockée en 50. Une petite partie de celle-ci est prélevée pour alimenter la station de production d'hypochlorite 70.

Le cas échéant, une rechloration résiduelle de cette eau a lieu au niveau de ce stockage 50, celle-ci ayant pour objectif de conserver un effet désinfectant rémanent sans altérer le goût ni ajouter d'odeur. La quantité d'hypochlorite nécessaire est alors prélevée dans la station de production d'hypochlorite 70.

La station de distribution 60 permet alors la délivrance d'eau à caractère potable 100 ayant une qualité comparable à de l'eau minérale.

Enfin, et à titre informatif, des essais ont été effectués afin de quantifier les effets du prétraitement d'eaux brutes selon l'invention et d'apprécier le caractère potable de l'eau à la sortie des moyens de séparation à membranes.

Les mesures ont été effectuées en trois points distincts visibles sur la figure : en A, afin d'analyser l'eau brute, en B afin d'analyser cette même eau après prétraitement au moyen du procédé selon l'invention, et en C afin d'analyser le caractère potable de l'eau.

Dans le premier cas, la séparation sur membranes s'effectuait par ultrafiltration. Les paramètre relevés sont les suivants :

| Analyse bactériologique | | | |
|---|---|---|---|
| Points de mesure | A | B | C |
| Germes aérobies mésophiles (/ml) | = 500 | ≈ 10 | 0 |
| Escherichia Coli (/50 ml) | 0 | 0 | 0 |
| Entérocoques (/50 ml) | 2 | 0 | 0 |
| Staphylococcus aureus (/50 ml) | 0 | 0 | 0 |
| Caractéristiques de l'eau | AE | N | N |
| (légende : N = bon résultat/eau potable A = nombre de germes trop élevé/eau non potable E = présence d'entérocoques fécaux/eau non potable) | | | |

| Analyse chimique | | | | |
|---|---|---|---|---|
| Points de mesure | | A | B | C |
| Chlore actif | mg/l | - | <0,01 | <0,01 |
| Conductivité (à 20°C) | µS/cm | 515 | 566 | 566 |
| pH | | 7,8 | 7,8 | 7,7 |
| Dureté totale | °Français | 29,5 | 29,1 | 29,2 |
| Dureté carbonatée | °Français | 17 | 17,5 | 17,6 |
| Chlorures | mg/l | 6,4 | 14,4 | 14,1 |
| Sulfates | mg/l | 7,6 | 7,6 | 7,5 |
| Ammonium | mg/l | 0,5 | <0,05 | <0,05 |
| Nitrites | mg/l | 0,16 | <0,01 | <0,01 |
| Nitrates | mg/l | 8 | 3,5 | 3,3 |
| Oxydabilité au permanganate | mg/l | 3,9 | 3,3 | 1,15 |
| Turbidité | NTU | 22,0 | 4,0 | 0,1 |
| Fer | mg/l | - | 0,10 | <0,05 |

L'eau conserve sa minéralité et devient beaucoup plus claire. L'ammonium et les nitrites sont à des concentrations inférieures aux limites de la méthode de dosage. Cette eau traitée est de bonne qualité pour la boisson.

Dan le second cas, la séparation sur membranes s'effectuait par nanofiltration. Les paramètres relevés sont les suivants :

| Analyse bactériologique | | | |
|---|---|---|---|
| Points de mesure | A | B | C |
| Germes aérobies mésophiles (/ml) | 600 | 5 | 0 |
| Coliformes totaux (/100 ml) | 25 000 | 40 | 0 |
| Streptocoques fécaux (/100 ml) | 3 400 | 50 | 0 |

| Analyse chimique | | | | |
|---|---|---|---|---|
| Points de mesure | | A | B | C |
| Chlore actif | mg/l | 0 | 0,15 | 0,10 |
| Conductivité | µS/cm | 400 | 460 | 350 |
| Turbidité | NTU | 25 | 4,9 | <0,05 |
| TAC | °Français | 20 | 20 | 5 |
| Titre Alcalimétrique Complet | | | | |
| Nitrates | mg/l | 12 | 8 | 7 |
| Sulfates | mg/l | 9 | 8,5 | 1,5 |
| Fer | mg/l | 0,3 | 0,1 | <0,01 |
| Manganèse | mg/l | 15 | 3 | <0,05 |
| COT | mg/l | 2,75 | 2,40 | 1,3 |
| Carbone Organique Total | | | | |

Cette eau s'est légèrement adoucie ; elle est potable ; les résultats bactériologiques sont bons. On observe une diminution des composés à valences multiples.

Enfin, dans le dernier cas, la séparation sur membranes s'effectuait par osmose inverse. Les paramètres relevés sont les suivants :

| Analyse bactériologique | | | |
|---|---|---|---|
| Points de mesure | A | B | C |
| Germes aérobies mésophiles (/ml) | 150 | 0 | 0 |
| Coliformes totaux (/100 ml) | 50 | 0 | 0 |
| Streptocoques fécaux (/100 ml) | 65 | 0 | 0 |

| Analyse chimique | | | | |
|---|---|---|---|---|
| Points de mesure | | A | B | C |
| Chlorure | mg/l | 3 200 | 3 200 | 5 |
| COT | mg/l | 24 | 9 | <0,1 |
| Carbone Organique Total | | | | |
| TAC | °Français | 70 | 65 | 3 |
| Titre Alcalimétrique Complet | | | | |

Cette eau a besoin d'être reminéralisée pour être une eau de boisson de qualité. Ceci est aisément obtenu en mélangeant une petite quantité d'eau provenant de B, et qui n'est pas traitée par osmose. De bons résultats sont également obtenus en mélangeant de la roche calcaire à l'eau obtenue en C.

De nombreuses améliorations et alternatives peuvent être apportées à ce procédé de prétraitement d'eaux brutes dans le cadre des revendications.

Notamment, dans l'unité de filtration 20, les étages de filtration sur matière pulvérulente 22 et de filtration biologique 24 peuvent être disposés dans l'ordre inverse ; dans ce cas, l'étage de filtration de la biomasse 26 peut même être supprimé, l'unité de filtration 20 devenant alors une unité de filtration à deux étages.

La disposition filtration biologique 24 avant filtration sur matière pulvérulente 22 est particulièrement avantageuse dans le cas où l'eau à traiter contient des hydrocarbures. En effet, la matière pulvérulente a généralement tendance à retenir quelques particules d'hydrocarbure la traversant. Ainsi, dans un tel cas, si l'étage de filtration 22 est en première place, celui-ci va se charger progressivement en particules d'hydrocarbure qui, lors du traitement d'un autre type d'eau brute, vont être à l'origine d'un mauvais goût caractéristique. Mettre en tête l'étage de filtration biologique 24 permet d'éviter cet inconvénient.

Toutefois, dans le cas d'une eau brute chargée en algues, on préférera la disposition décrite à l'origine, soit filtration sur matière pulvérulente 22 avant filtration biologique 24 ; en effet, les algues provoqueraient à la longue le colmatage du filtre biologique placé en premier étage.

Il est à noter enfin que quel que soit l'agencement des étages de cette unité de filtration 20, le coagulum réinjecté depuis la phase 36 de l'unité de désinfection poussée est toujours relié à l'entrée de l'étage de filtration sur matière pulvérulente 22.

## Revendications

1. Procédé de prétraitement d'eaux brutes (1) en vue de la production d'eau à caractère potable (100) avant passage dans des moyens de séparation à membranes (40), comprenant en combinaison et dans l'ordre une séquence de pompage (12) de l'eau brute, une séquence de séparation (14) des matières en suspension, une séquence de filtration fine (20) et une séquence de désinfection poussée (30) utilisant un composé chloré, caractérisé en ce que pendant la désinfection poussée (30), l'excès de chlore actif résiduel est réduit par électrolyse en courant alternatif de particules de fer telles que des copeaux ou de la grenaille.

2. Procédé selon la revendication 1, caractérisé en ce que la séquence de séparation (14) de l'eau brute pompée (1) et des matières en suspension dans celle-ci est réalisée par cyclonage, et permet d'extraire les particules en suspension dans l'eau brute d'une taille sensiblement supérieure à 40 microns.

3. Procédé selon la revendication 1 ou 2, caractérisé en ce que la séquence de filtration fine (20) comprend une première étape (22) de filtration sur matière pulvérulente, suivie d'une étape (24) de filtration biologique, et se termine par une étape (26) de filtration permettant de retenir la biomasse formée.

4. Procédé selon la revendication 1 ou 2, caractérisé en ce que la séquence de filtration fine (20) comprend une première étape (24) de filtration biologique suivie d'une étape (22) de filtration sur matière pulvérulente.

5. Procédé selon la revendication 3 ou 4, caractérisé en ce que la filtration biologique (24) est réalisée au moyen d'un filtre qui, à l'équilibre, est colonisé par les micro-organismes présents dans l'eau à traiter.

6. Procédé selon une ou plusieurs des revendications précédentes, caractérisé en ce que la séquence de désinfection poussée (30) comprend une phase initiale (32) de chloration de choc de l'eau, suivie d'une phase (34) de réduction du chlore actif résiduel libre ou combiné réalisée simultanément avec une étape (36) de coagulation des matières organiques résiduelles et de décantation du coagulum.

7. Procédé selon la revendication 6, caractérisé en ce que le coagulum est réinjecté partiellement ou totalement à l'entrée de l'étape (22) de filtration sur matière pulvérulente.

8. Procédé selon la revendication 6 ou 7, caractérisé en ce que le composé nécessaire à la phase de chloration de choc (32) est de l'hypochlorite produit sur place par électrolyse de saumure.

9. Procédé selon la revendication 1, dans lequel les particules de fer sont contenues dans des paniers, caractérisé en ce que ces paniers sont en titane ou en zirconium et recouverts d'un catalyseur, et en ce que ce catalyseur est du palladium.

10. Procédé selon la revendication 9, caractérisé en ce que les paniers sont agités mécaniquement ou au moyen d'ultrasons.

11. Procédé selon une ou plusieurs des revendications précédentes, caractérisé en ce qu'en aval de la phase de désinfection poussée (30) est réalisée une aération de l'eau:par barbotage d'air.

12. Utilisation du procédé de prétraitement d'eaux brutes pour traiter l'eau obtenue selon le procédé de l'une quelconque des revendications précédentes à l'aide de moyens de séparation à membranes (40) situés en aval.

13. Utilisation selon la revendication 12, caractérisée en ce que les moyens de séparation à membranes (40) sont l'ultrafiltration ou la nanofiltration dans le cas où l'eau brute est une eau douce, et l'osmose inverse dans le cas où l'eau brute est de l'eau de mer ou saumâtre.

## Patentansprüche

1. Verfahren zur Vorbehandlung von aufzuarbeitendem Wasser (1) zur Herstellung von trinkbarem Wasser (100) vor der Einleitung in Mittel (40) zur Trennung mit Membranen, das in Kombination und in dieser Reihenfolge einen Pumpvorgang (12) für das aufzuarbeitende Wasser, einen Trennungsvorgang (14) von sich in Suspension befindlichen Stoffen, einen Feinfiltrationsvorgang (20) und einen angetriebenen Desinfektionsvorgang (30) aufweist, der einen chlorierten Bestandteil verwendet, **dadurch gekennzeichnet**, dass während der angetriebenen Desinfektion (30) der Überschuss von aktivem Restchlor durch Elektrolyse mit einem wechselnden Strom von Eisenteilchen wie Spänen oder granulatartigen Körnern reduziert wird.

2. Verfahren nach Anspruch 1, dadurch gekennzeichnet, dass der Trennungsvorgang (14) des gepumpten aufzuarbeitenden Wassers (1) und der sich darin in Suspension befindlichen Stoffe durch Zyklonierung ausgeführt wird und es gestattet, sich in dem aufzuarbeitenden Wasser in Suspension befindliche Teilchen mit einer Größe von mehr als 40 Mikrometer zu extrahieren.

3. Verfahren nach Anspruch 1 oder Anspruch 2, dadurch gekennzeichnet, dass der Feinfiltrationsvorgang (20) eine erste Filtrationsstufe (22) auf der Grundlage einer pulverförmigen Substanz, gefolgt von einer Stufe (24) auf der Grundlage einer biologischen Filtration aufweist und durch eine Filtrationsstufe (26) abgeschlossen ist, die es gestattet, die gebildete Biomasse zurückzuhalten.

4. Verfahren nach Anspruch 1 oder Anspruch 2, dadurch gekennzeichnet, dass der Feinfiltrationsvorgang (20) eine erste biologische Filtrationsstufe (24) aufweist, die von einer Filtrationsstufe (22) auf der Grundlage einer pulverförmigen Substanz gefolgt ist.

5. Verfahren nach Anspruch 3 oder Anspruch 4, dadurch gekennzeichnet, dass die biologische Filtration (24) mittels eines Filters ausgeführt wird, das im Gleichgewicht durch Mikroorganismen bevölkert ist, die in dem zu behandelnden Wasser vorhanden sind.

6. Verfahren nach einem oder mehreren der voranstehenden Ansprüche, dadurch gekennzeichnet, dass der angetriebene Desinfektionsvorgang (30) einen Anfangsschritt (32) mit Schockchlorierung des Wassers aufweist, der von einem Schritt (34) der Reduktion des freien aktiven Restchlors gefolgt ist oder gemeinsam mit einem Schritt (36) der Ausscheidung von organischen Restbestandteilen und Klärung des Ausscheidungsgutes ausgeführt wird.

7. Verfahren nach Anspruch 6, dadurch gekennzeichnet, dass das Ausscheidungsgut teilweise oder vollständig zu Beginn der Filtrationsstufe (22) auf der Grundlage von pulverförmiger Substanz erneut eingeführt wird.

8. Verfahren nach Anspruch 6 oder Anspruch 7, dadurch gekennzeichnet, dass der bei dem Schritt der Schockchlorierung (32) erforderliche Bestandteil Hypochlorit ist, das an Ort und Stelle durch Elektrolyse einer Salzlösung hergestellt wird.

9. Verfahren nach Anspruch 1, bei dem die Eisenteilchen in korbartigen Behältnissen bevorratet werden, dadurch gekennzeichnet, dass die Behältnisse aus Titan oder Zirkonium und mit einem Katalysator bedeckt sind, und dass der Katalysator Palladium ist.

10. Verfahren nach Anspruch 9, dadurch gekennzeichnet, dass die Behältnisse mechanisch oder mittels Ultraschall angeregt werden.

11. Verfahren nach einem oder mehreren der voranstehenden Ansprüche, dadurch gekennzeichnet, dass stromabwärts des Schritts der angetriebenen Desinfektion (30) eine Belüftung des Wassers über Durchperlen von Luft ausgeführt wird.

12. Verwendung des Verfahrens der Vorbehandlung von aufzuarbeitendem Wasser zur Behandlung von Wasser, das mit Hilfe von stromabwärts angeordneten Mitteln (40) zur Trennung mit Membranen gemäß dem Verfahren nach einem oder mehreren der voranstehenden Ansprüche erhalten worden ist.

13. Verwendung gemäß Anspruch 12, dadurch gekennzeichnet, dass die Mittel (40) zur Trennung mit Membranen Ultrafiltrierung oder Nanofiltrierung im Fall von Süßwasser als aufzuarbeitendem Wasser und inverse Osmose im Fall von Meerwasser oder Brackwasser als aufzuarbeitendem Wasser sind.

## Claims

1. Process for pretreating raw water (1) with a view to producing water of a potable nature (100) before passing it through means of separation with membranes (40) comprising, in combination and in order, a sequence of pumping (12) raw water, a sequence for separating (14) materials in suspension, a sequence for fine filtration (20) and a sequence for intensive disinfection (30) using a chlorinated compound, characterized in that, during the intensive disinfection (30), the excess residual active chlorine is reduced by electrolysis, in an alternating current, with iron particles such as chips or shot.

2. Process according to claim 1, characterized in that the sequence of separating (14) pumped raw water (1) and material in suspension therein is carried out by cycloning, and makes it possible to extract the particles in suspension in the raw water having a size substantially greater than 40 microns.

3. Process according to claim 1 or 2, characterized in that the fine filtration sequence (20) comprises a first filtration stage (22) through powdered material, followed by a biological filtration stage (24), and ends in a filtration stage (26) which enables the biomass formed to be retained.

4. Process according to claim 1 or 2, characterized in that the fine filtration sequence (20) comprises a first. biological filtration stage (24) followed by a filtration stage (22) through a powdered material.

5. Process according to claim 3 or 4, characterized in that the biological filtration (24) is carried out by means of a filter which, at equilibrium, is colonized by microorganisms present in the water to be treated.

6. Process according to one or more of the preceding claims, characterized in that the intensive disinfection sequence (30) comprises an initial shock chlorination phase (32) of the water, followed by a phase (34) for reducing free or combined residual active chlorine carried out simultaneously with a stage (36) for coagulating residual organic materials and for decanting the coagulum.

7. Process according to claim 6, characterized in that the coagulum is partially or totally reinjected at the inlet to the stage (22) of filtration through a powdered material.

8. Process according to claim 6 or 7, characterized in that the compound necessary for the shock chlorination phase (32) is hypochlorite produced in situ by the electrolysis of brine.

9. Process according to claim 1, wherein the iron particles are contained in baskets, characterized in that these baskets are made of titanium or zirconium and covered with a catalyst, and in that this catalyst is palladium.

10. Process according to claim 8, characterized in that the baskets are agitated mechanically or by means of ultrasound.

11. Process according to one or more of the preceding claims, characterized in that the water is aerated by bubbling in air, downstream from the intensive disinfection phase (30).

12. Use of the process for pretreating raw water in order to treat water obtained according to the process of any one of the preceding claims with the aid of means of separation with membranes (40) situated downstream.

13. Use according to claim 12, characterized in that the means of separation with membranes (40) are ultrafiltration or nanofiltration in the case where the raw water is fresh water, and inverse osmosis in the case where the raw water is sea or brackish water.
